# EUROPÄISCHE PATENTSCHRIFT

(11) **EP 1 676 973 B1**
(45) Veröffentlichungstag und Bekanntmachung des Hinweises auf die Patenterteilung: **28.04.2010**
(21) Anmeldenummer: 04030930.4
(22) Anmeldetag: 29.12.2004
(51) Int. Cl.: E06B 7/22

(54) **Türprofil zwischen Türflügel und Wandung eines Behälters**
Door profile between door wing and the wall of a compartment
Profilé de porte entre le battant d'une porte et la paroi d'un compartiment

(43) Veröffentlichungstag der Anmeldung: 05.07.2006
(73) Patentinhaber: Hübner GmbH, 34123 Kassel (DE); Räckers GmbH & Co. KG, 48683 Ahaus-Ottenstein (DE)
(72) Erfinder: Pesenacker, Dieter, 48683 Ahaus (DE); Räckers, Johannes, 48683 Ahaus (DE); Heuser, Christoph, 34379 Calden-Westuffeln (DE); Pogorelow, Wiatscheslaw, 34537 Bad Wildungen (DE)
(74) Vertreter: Walther, Walther & Hinz GbR

(56) Entgegenhaltungen:
- DE-A1- 10 046 122
- FR-A- 1 178 894
- US-A- 3 029 481

## Beschreibung

Die Erfindung betrifft ein aus elastischem Material hergestelltes Türprofil zwischen Türflügel und Wandung eines Behälters, insbesondere des Kofferaufbaues eines Lkws, umfassend ein Basisprofil, wobei das Basisprofil in seiner Grundausstattung selbst eine Dichtung, die die erforderliche Dichtfunktion erfüllen kann, aufweist.

Aus der DE-OS 100 46 122 A1 ist ein Dichtungselement bekannt, welches einen Dichtungskörper aus Silikon umfasst, der von einem Trägerelement klemmbar aufnehmbar ist. Der Trägerkörper ist hierbei durch eine Klebschicht auf der entsprechenden Unterlage befestigbar. Alle Merkmale des Oberbegriffs des Anspruchs 1 sind in diesen Dokument offenbart.

Aus der FR 1.178.894 sind Dichtungen bekannt, bestehend wiederum aus einem Trägerkörper und einem Dichtungsprofil, das vom Trägerkörper aufnehmbar ist. Der Trägerkörper ist hierbei klemmbar von einer entsprechend ausgebildeten Schiene aufnehmbar. Das Dichtungsprofil wird durch eine Nut im Trägerkörper gehalten.

Aus der US-PS 3,029,481 ist ebenfalls eine Dichtung bekannt, umfassend einen Trägerkörper mit einem Dichtungsprofil. Ganz ähnlich wie bei der FR 1.178.894 erfolgt die Verbindung zwischen Trägerkörper und Dichtungsprofil, ähnlich einer Nut- und Federverbindung.

Im Folgenden gilt, dass unter einem Behälter nicht nur insbesondere der Kofferaufbau eines Lkws verstanden wird, sondern beispielsweise auch ein durch Türen verschließbarer Container. Derartige Kofferaufbauten von Lkws bzw. auch Container sind im täglichen Betrieb sehr rauen Bedingungen unterworfen. Nicht nur das solche Türen bzw. Türflügel im täglichen Betrieb relativ häufig geöffnet und geschlossen werden, was zu einer extremen Beanspruchung der die Abdichtfunktionen übernehmenden Türprofile führt, sondern es besteht darüber hinaus auch die Gefahr der unmittelbaren Beschädigung der Türprofile aus elastisch nachgiebigem Material, wenn z. B. der Lastwagen mit dem Kofferaufbau bei geöffneter Tür von hinten an die Laderampe heranfährt, und schlussendlich mit dem Türprofil an die Rampe anstößt. Durch den besagten hohen Verschleiß an dem Türprofil ist es erforderlich, dass die Türprofile häufig ausgetauscht werden müssen. Dies ist insbesondere dann notwendig, wenn der Behälter eine Kühlfunktion übernehmen muss, also beispielsweise wenn es sich bei dem Lkw-Aufbau um einen sogenannten Kühlkoffer-Aufbau handelt. Denn in einem solchen Fall ist sicherzustellen, dass eine Dichtung zwischen Türflügel und Aufbau voll funktionsfähig ist, da ansonsten im Extremfall die gewünschte Temperatur im Inneren des Aufbaues bzw. Behälters nicht gehalten werden kann. Gleiches gilt natürlich sinngemäß auch bei einem Container.

Derartige Türprofile besitzen ein Basisprofil, das in einer Schiene befestigt, vorzugsweise eingeklebt ist. Das Türprofil kann hierbei entweder am Behälter oder am Türflügel befestigt sein. In jedem Fall ist das Türprofil umlaufend vorgesehen, um die erforderliche Dichtfunktion zu erfüllen. Ist nun ein solches Türprofil derart beschädigt, dass ein Austausch erforderlich ist, so muss das Basisprofil aus der Schiene entfernt werden. Da - wie bereits ausgeführt - das Basisprofil mit der Schiene verklebt ist, ist dies mit gewissen Schwierigkeiten verbunden. In jedem Fall ist die Prozedur zum Entfernen des Basisprofils des Türprofils aus der Schiene sehr zeitaufwendig. Hinzukommt, dass bei erneutem Einkleben eines solchen Basisprofils die Schiene nach Möglichkeit von sämtlichen Klebstoffresten befreit sein muss, da andernfalls nicht sichergestellt ist, dass das auszutauschende Basisprofil dauerhaft mit der Schiene im Wege einer erneuten Verklebung verbunden werden kann.

Der Erfindung liegt daher die Aufgabe zugrunde, ein Türprofil derart auszugestalten, dass bei verschlissenem Türprofil mit relativ einfachen und preiswerten Mitteln die erforderliche Dichtfunktion wieder hergestellt werden kann.

Die Aufgabe wird erfindungsgemäß dadurch gelöst, dass das Basisprofil zusätzlich dazu Mittel zur klemmbaren Aufnahme mindestens einer Dichtleiste aufweist, wobei das Mittel einen Schlitz umfasst, der durch einen Steg verschließbar ist, wobei der Steg zur Freilegung des Schlitzes von dem Basisprofil abreißbar ist. Durch den Steg wird verhindert, dass der Schlitz verschmutzt. Hieraus folgt, dass im Falle, dass die Dichtung des Basisprofils verschlissen ist, nach dem Abschneiden dieser Dichtung die Dichtleiste mit einer neuen Dichtung auf das Basisprofil aufgesetzt werden kann. Hieraus wird deutlich, dass dann, wenn das Türprofil verschlissen ist, durch dieses Basisprofil eine neue Dichtleiste aufgenommen wird, ohne dass das Basisprofil selbst aus der Aufnahme der Schiene entfernt werden müsste.

Weitere vorteilhafte Merkmale sind den Unteransprüchen zu entnehmen.

Wie bereits ausgeführt ist vorgesehen, dass das Basisprofil mindestens einen Schlitz zur Aufnahme mindestens einer Zapfenleiste der mindestens einen Dichtleiste aufweist. In diesem Zusammenhang ist denkbar, das Basisprofil nicht nur mit einem Schlitz zur Aufnahme einer Zapfenleiste für eine Dichtleiste zu versehen, sondern mit vorzugsweise zwei Schlitzen. Das heißt schlussendlich, dass mehrere solcher Dichtleisten auf einem Basisprofil anbringbar sind, um die Dichtwirkung schlussendlich zu erhöhen. Sind nun z. B. die Dichtlippen verschlissen, dann ist lediglich die Dichtleiste auszutauschen, ohne dass hierbei das Basisprofil aus der Aufnahme, beispielsweise einer Schiene, entfernt werden muss, wie dies beim Stand der Technik der Fall ist.

Eine besonders vorteilhafte Ausführungsform zeichnet sich dadurch aus, dass das Basisprofil selbst mindestens eine Dichtung aufweist. Hierbei ist nach einer Variante die Dichtung des Basisprofils mindestens zu einer Seite, vorzugsweise zu beiden Seiten des Schlitzes längs des Basisprofils verlaufend jeweils als Dichtlippe ausgebildet, wobei alternativ die Dichtung auch als Hohlprofil gestaltet sein kann. Hieraus wird deutlich, dass neben dem Schlitz zur Aufnahme einer Dichtleiste das Basisprofil selbst bereits mit einer Dichtung versehen sein kann, die entweder als Hohlprofil (Hohlkammerdichtung) ausgebildet ist, oder aber die Dichtung besteht aus zwei parallel zueinander verlaufenden Dichtlippen. Das heißt, dass das Basisprofil in seiner Grundausstattung bereits die erforderliche Dichtfunktion auf Grund der Dichtung übernehmen kann. Ist die Dichtung des Basisprofils verschlissen, so kann diese im Bereich des Basisprofils abgeschnitten werden, um dann die bereits zuvor erwähnte Dichtleiste auf dieses Basisprofil aufzusetzen. Die Dichtleiste selbst ist vorteilhaft mit einer Dichtung entsprechend der des Basisprofils ausgestattet, also weist beispielsweise eine Hohlkammerdichtung oder aber Dichtlippen auf, vorzugsweise in Form zweier parallel zueinander verlaufender Dichtlippen.

Um zu gewährleisten, dass die Dichtleiste mit ihrer Zapfenleiste sicher in dem Schlitz des Basisprofils befestigt ist, ist weiterhin vorgesehen, dass die Zapfenleiste in dem Schlitz des Basisprofils verrastet aufnehmbar ist. Das bedeutet, dass sowohl der Schlitz als auch die Zapfenleiste seitlich jeweils eine Verzahnung für eine quasi formschlüssige Verbindung aufweisen. Gleiches gilt entsprechend, wenn das Basisprofil mehrere Dichtleisten mit entsprechend mehreren Zapfenleisten aufnehmen soll.

In Bezug auf die Dichtungen ist vorgesehen, dass diese Dichtungen eine geringere Shorehärte als das Basisprofil und die Zahnleiste aufweisen. Das heißt, die Dichtungen sind weicher als das Basisprofil und auch weicher als die Zapfenleiste. Insofern können die Dichtungen auch relativ einfach vom Basisprofil abgeschnitten werden.

Des Weiteren ist vorgesehen, dass die Variante mit den beiden parallel zueinander verlaufenen Dichtlippen die Dichtlippen parallel zueinander verlaufen und aufeinander zu gerichtet sind. Das heißt, dass im abgedichteten Zustand, d. h. bei geschlossener Tür, die beiden Dichtlippen einander überlappen und so für einen dichten Abschluss sorgen.

Anhand der Zeichnungen wird die Erfindung beispielhaft näher erläutert.
Fig. 1 zeigt das Türprofil in seiner Grundausstattung;
Fig. 2 zeigt die Dichtleiste mit der Zapfenleiste;
Fig. 3 zeigt das Basisprofil mit aufsitzender Zapfenleiste;
Fig. 4 zeigt das Türprofil in einer Grundausstattung mit einem Hohlprofil;
Fig. 5 zeigt die Dichtleiste mit Zapfenleiste und Hohlprofil;
Fig. 6 zeigt das Basisprofil mit aufsitzender Dichtleiste mit Hohlprofil.

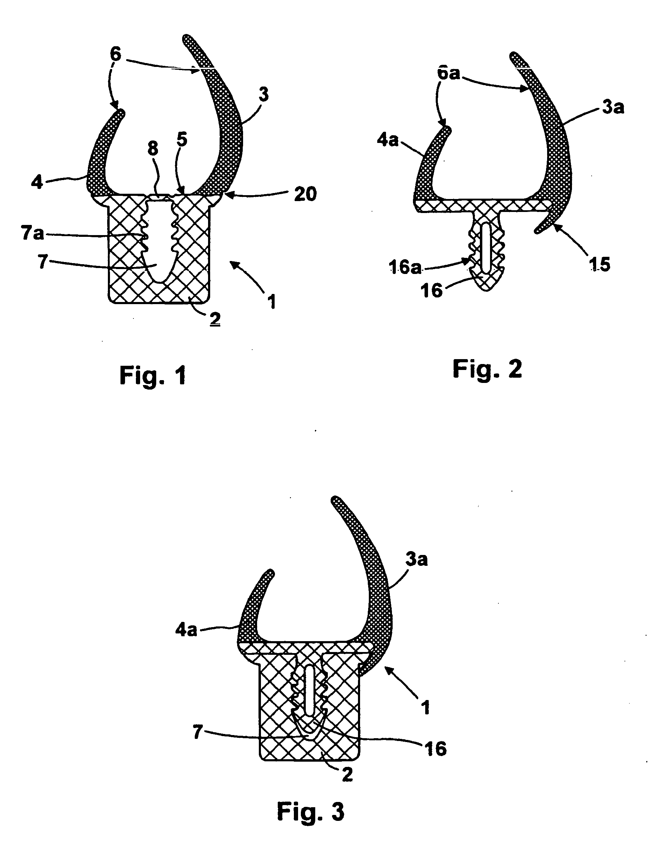

Das insgesamt mit 1 bezeichnete Türprofil in seiner Grundausstattung gemäß Figur 1 bis 3 zeigt das Basisprofil 2 mit der Dichtung 6, umfassend die beiden Dichtlippen 3, 4, die parallel zueinander verlaufend auf der Oberseite 5 des Basisprofils 2 angeordnet sind. Die beiden Dichtlippen 3, 4 sind hierbei leicht aufeinander zugebogen und sind unterschiedlich lang. Bei geschlossener Tür werden die beiden Dichtlippen 3, 4 aufeinander zu bewegt und überlappen sich schlussendlich.

Erkennbar besitzt das Basisprofil 2 einen Schlitz 7, wobei der Schlitz 7 durch einen Abreißsteg 8 verschließbar ist. Um den Schlitz 7 zu öffnen, muss der Steg abgerissen werden. Sind nun die Dichtlippen 3, 4 verschlissen, so werden diese in unmittelbarem Bereich über dem Basisprofil 2 (Pfeil 20) abgeschnitten, wobei dann die mit 15 bezeichnete Dichtleiste eingeklemmt werden kann. Hierzu besitzt die Dichtleiste 15 die Zapfenleiste 16, die im Bereich ihrer Seitenwangen eine Verzahnung 16a besitzt, wobei korrespondierend hierzu der Schlitz 7 eine entsprechende Verzahnung 7a aufweist. Die Dichtleiste 15 zeigt als Dichtung 6a darüber hinaus die beiden Dichtlippen 3a, 4a, die in gleicher Weise ausgebildet sind, wie die an dem Basisprofil ursprünglich angebrachten Dichtlippen 3, 4. Auch diese Dichtlippen weisen eine Shorehärte auf, die geringer ist, als die des Basisprofils bzw. auch die der Dichtleiste und der Zapfenleiste. Im Einzelnen ist vorgesehen, dass die Dichtlippen eine Härte von 60 Shore A, die Zapfenleiste, das Basisprofil und auch die Dichtleiste selbst eine Härte von 90 Shore A aufweisen.

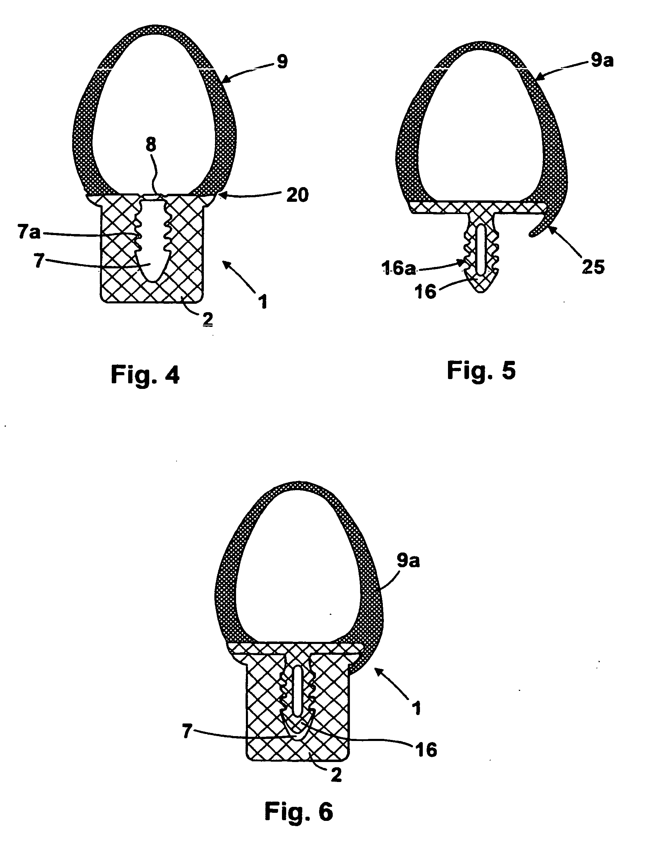

Die Ausführungsform gemäß den Figuren 4 bis 6 unterscheidet sich von der gemäß Figur 1 bis 3 lediglich dadurch, dass die Dichtung der Dichtleiste 25 als Hohlprofil 9, 9a ausgebildet ist. Ansonsten ist diese Ausführungsform mit den gleichen Bezugszeichen für gleiche Gegenstände versehen; auch im Übrigen gelten die Ausführungen in Bezug auf die Figur 1 bis 3 für die Figuren 4 bis 6 entsprechend.

## Patentansprüche

1. Aus elastischem Material hergestelltes Türprofil zwischen Türflügel und Wandung eines Behälters, insbesondere des Kofferaufbaues eines Lkws, umfassend ein Basisprofil (1), wobei das Basisprofil in seiner Grundausstattung selbst eine Dichtung (6.9), die die erforderliche Dichtfunktion erfüllen kann, aufweist,
**dadurch gekennzeichnet, dass** das Basisprofil zusätzlich dazu Mittel (7) zur klemmbaren Aufnahme mindestens einer Dichtleiste (2) aufweist, wobei das Mittel einen Schlitz (7) umfasst, der durch einen Steg (8) verschließbar ist, wobei der Steg (8) zur Freilegung des Schlitzes (7) von dem Basisprofil (2) abreißbar ist.

2. Türprofil nach Anspruch 1,
**dadurch gekennzeichnet,**
**dass** das Basisprofil mindestens eine Dichtung (6, 9) aufweist.

3. Türprofil nach einem oder mehreren der voranstehenden Ansprüche,
**dadurch gekennzeichnet,**
**dass** die Dichtung (6) des Basisprofils (2) mindestens zu einer Seite, vorzugsweise zu beiden Seiten des Schlitzes (7) längs des Basisprofils (2) verlaufend, jeweils als Dichtlippe (3, 4) ausgebildet ist.

4. Türprofil nach einem oder mehreren der voranstehenden Ansprüche,
**dadurch gekennzeichnet,**
**dass** die Dichtung (9) als Hohlprofil ausgebildet ist.

5. Türprofil, nach einem oder mehreren der voranstehenden Ansprüche
**dadurch gekennzeichnet,**
**dass** die Dichtleiste (15,25) eine Dichtung (6a,9a) aufweist.

6. Türprofil nach einem oder mehreren der voranstehenden Ansprüche
**dadurch gekennzeichnet,**
**dass** die Dichtung (6a) der Dichtleiste (15) als mindestens eine, vorzugsweise zwei längs zur Dichtleiste (15) verlaufende Dichtlippen (3a, 4a) ausgebildet ist.

7. Türprofil nach einem oder mehreren der voranstehenden Ansprüche
**dadurch gekennzeichnet,**
**dass** die Dichtung (9a) der Dichtleiste (25) als Hohlprofil ausgebildet ist.

8. Türprofil nach einem oder mehreren der vorangehenden Ansprüche,
**dadurch gekennzeichnet,**
**dass** die Zapfenleiste (16) in dem Schlitz (7) des Basisprofils (2) verrastet aufnehmbar ist.

9. Türprofil nach einem oder mehreren der vorangehenden Ansprüche,
**dadurch gekennzeichnet,**
**dass** die Dichtung (6, 9) eine geringere Shorehärte als das Basisprofil (2) und die Zapfenleiste (16) aufweist.

10. Vorrichtung nach wenigstens einem der vorangehenden Ansprüche,
**dadurch gekennzeichnet,**
**dass** die beiden Dichtlippen (3, 4; 3a, 4a) parallel zueinander verlaufen und aufeinander zugerichtet sind.

## Claims

1. A door profile made from an elastic material between a door wing and the wall of a box, in particular of the van body of a lorry, incorporating a base profile (1), said base profile comprising as part of its own basic equipment a seal (6, 9) for performing the required sealing function,
**characterized in**
**that** the base profile comprises, in addition thereto, means (7) for clampingly receiving at least one sealing ledge (2), said means incorporating a slot (7) that may be closed by a web (8), said web (8) being adapted to be torn from the base profile (2) in order to uncover the slot (7).

2. The door profile as set forth in claim 1,
**characterized in**
**that** the base profile comprises at least one seal (6, 9).

3. The door profile as set forth in one or several of the afore mentioned claims,
**characterized in**
**that** the seal (6) of the base profile (2) is configured to be a sealing lip (3, 4) at least on one side, preferably on either side of the slot (7), which extends alongside the base profile (2).

4. The door profile as set forth in one or several of the afore mentioned claims,
**characterized in**
**that** the seal (9) is configured to be a hollow profile.

5. The door profile as set forth in one or several of the afore mentioned claims,
**characterized in**
**that** the sealing ledge (15, 25) comprises a seal (6a, 9a).

6. The door profile as set forth in one or several of the afore mentioned claims,
**characterized in**
**that** the seal (6a) of the sealing ledge (15) is configured to be at least one, preferably two, sealing lips (3a, 4a), which extend along the length of the sealing ledge (15).

7. The door profile as set forth in one or several of the afore mentioned claims,
**characterized in**
**that** the seal (9a) of the sealing ledge (25) is configured to be a hollow profile.

8. The door profile as set forth in one or several of the afore mentioned claims,
**characterized in**
**that** the pin ledge (16) may be received by snap-fit in the slot (7) of the base profile (2).

9. The door profile as set forth in one or several of the afore mentioned claims,
**characterized in**
**that** the seal (6, 9) has a lower shore hardness than the base profile (2) and the pin ledge (16).

10. A device as set forth in one or several of the afore mentioned claims,
**characterized in**
**that** the two sealing lips (3, 4; 3a, 4a) extend parallel to each other and are oriented toward each other.

## Revendications

1. Profilé de porte réalisé en matière élastique entre le battant d'une porte et la paroi d'une boîte, notamment du fourgon d'un camion, du type comprenant un profilé de base (1), le profilé de base comportant dans son équipement de base un joint d'étanchéité (6, 9) qui est en mesure d'assurer l'étanchéité requise,
**caractérisé en ce**
**que** le profilé de base comporte de plus des moyens (7) destinés à recevoir par serrage au moins un bandeau d'étanchéité (2), le moyen comprenant une fente (7) apte à être fermée par une languette (8) qui peut être arrachée du profilé de base (2) en vue de dégager la fente (7).

2. Profilé de porte selon la revendication 1,
**caractérisé en ce**
**que** le profilé de base comporte au moins un joint (6, 9).

3. Profilé de porte selon une ou plusieurs des revendications précédentes,
**caractérisé en ce**
**que** le joint (6) du profilé de base (2) est réalisé sur un côté du moins, de préférence sur les deux côtés de la fente (7), sous forme de lèvre d'étanchéité (3, 4) s'étendant le long du profilé de base (2).

4. Profilé de porte selon une ou plusieurs des revendications précédentes,
**caractérisé en ce**
**que** le joint (9) est réalisé sous forme de profilé creux.

5. Profilé de porte selon une ou plusieurs des revendications précédentes,
**caractérisé en ce**
**que** le bandeau d'étanchéité (15, 25) comporte un joint (6a, 9a).

6. Profilé de porte selon une ou plusieurs des revendications précédentes,
**caractérisé en ce**
**que** le joint (6a) du bandeau d'étanchéité (15) est réalisé sous forme d'au moins une, de préférence de deux lèvres d'étanchéité (3a, 4a) s'étendant le long du bandeau d'étanchéité (15).

7. Profilé de porte selon une ou plusieurs des revendications précédentes,
**caractérisé en ce**
**que** le joint (9a) du bandeau d'étanchéité (25) est réalisé sous forme de profilé creux.

8. Profilé de porte selon une ou plusieurs des revendications précédentes,
**caractérisé en ce**
**que** la baguette comportant des doigts (16) est apte à être reçue par encliquetage dans la fente (7) du profilé de base (2).

9. Profilé de porte selon une ou plusieurs des revendications précédentes,
**caractérisé en ce**
**que** le joint (6, 9) comporte une dureté Shore inférieure à celle du profilé de base (2) et à celle de la baguette comportant des doigts (16).

10. Dispositif selon au moins une des revendications précédentes,
**caractérisé en ce**
**que** les deux lèvres d'étanchéité (3, 4 ; 3a, 4a) sont parallèles et se font face.
